Europäisches Patentamt

European Patent Office

Office européen des brevets

(19)

(11) Numéro de publication : **0 071 687**
**B1**

(12) # FASCICULE DE BREVET EUROPÉEN

(45) Date de publication du fascicule du brevet :
**21.11.85**

(51) Int. Cl.⁴ : **A 01 F 15/00**

(21) Numéro de dépôt : **81401297.7**

(22) Date de dépôt : **12.08.81**

(54) Dispositif de liage pour presses à balles cylindriques.

(43) Date de publication de la demande :
**16.02.83 Bulletin 83/07**

(45) Mention de la délivrance du brevet :
**21.11.85 Bulletin 85/47**

(84) Etats contractants désignés :
**DE FR GB IT NL**

(56) Documents cités :
**DE-A- 2 831 700**
**FR-A- 2 366 786**
**FR-A- 2 483 164**
**US-A- 3 265 315**

(73) Titulaire : **JOHN DEERE (Société Anonyme)**
**8, Quai de la Madeleine**
**F-45000 Orléans (FR)**

(72) Inventeur : **Viaud, Jean**
**Chargey-les-Gray**
**F-70100 Gray (FR)**
Inventeur : **Berthet, Jean-Paul**
**11, Faubourg Roch**
**F-70100 Arc-les-Gray (FR)**

(74) Mandataire : **Pruvost, Marc Henri**
**Cabinet ORES 6, Avenue de Messine**
**F-75008 Paris (FR)**

Jouve, 18, rue St-Denis, 75001 Paris, France

## Description

La présente invention concerne les presses à balles rondes ou cylindriques.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un organe de guidage de la ficelle déplacé transversalement au sens de marche de la presse, le plus souvent devant l'orifice d'entrée des produits de récolte à l'intérieur de la chambre de formation de la balle. La ficelle est alors prélevée à une réserve telle qu'une boîte à ficelle prévue sur le châssis ou corps de la presse. Du fait du déplacement transversal de l'organe de guidage, cette ficelle forme autour de la balle, lorsqu'elle est appelée par la rotation de cette dernière, des spires hélicoïdales assurant un liage sur toute la longueur de cette balle.

Il est connu de réaliser l'organe de guidage de la ficelle sous la forme d'un bras, notamment d'un bras tubulaire, monté à pivotement sur la presse, de manière à effectuer, sous l'action de moyens appropriés, un mouvement de balayage transversal en face de l'orifice d'entrée des produits de récolte dans la chambre de formation de la balle.

On a également déjà proposé de réaliser l'organe de guidage de la ficelle sous la forme d'un organe se déplaçant sur un guide rectiligne disposé devant cet orifice d'entrée des produits de récolte dans la chambre de formation de la balle. Des moyens sont alors prévus pour provoquer de façon positive le déplacement de cet organe le long de ce guide rectiligne.

Il est, ainsi connu, par le Brevet FR-A-2 366 786, de réaliser un dispositif de liage pour presses à balles rondes comprenant un organe de guidage de la ficelle déplaçable transversalement à la presse sur un guide rectiligne constitué par une vis montée devant l'orifice d'entrée des produits de récolte et destinée à tourner dans le châssis ou corps de la presse, cette vis présentant un double filet hélicoïdal.

On comprendra toutefois que de tels moyens, utilisant un moteur électrique et des contacteurs pour l'obtention des déplacements appropriés, sont peu compatibles avec les conditions de travail d'une presse à balles et que des produits de récolte peuvent, par exemple, gêner le fonctionnement des contacteurs électriques et perturber ainsi l'opération de liage.

On a encore proposé, dans la demande de Brevet FR-A-2 483 164, de prévoir, comme organe de guidage de la ficelle déplaçable sur un guide rectiligne constitué par une vis à double filet, une poulie entraînée en rotation par l'appel exercé sur la ficelle par la balle en mouvement dans la chambre de la presse, de sorte que la rotation de cette poulie provoque, par sa coopération avec le double filet de la vis, son déplacement transversal en translation dans un sens ou dans l'autre.

Toutefois, l'usinage d'une vis à double filet peut présenter certaines difficultés et augmente de toute façon le prix de revient de l'ensemble.

Un but de l'invention est de remédier à l'inconvénient résultant de ce coût d'usinage et de créer un dispositif du type général mentionné permettant d'obtenir le déplacement en va-et-vient d'un guide-ficelle transversalement à la presse avec des moyens de fabrication plus simples.

L'invention est matérialisée en conséquence dans un dispositif de liage pour presses à balles rondes ou cylindriques comprenant un organe de guidage de la ficelle déplaçable transversalement à la presse sur un guide rectiligne constitué par une vis du type à filet hélicoïdal montée devant l'orifice d'entrée des produits de récolte dans la chambre de la presse et destinée à tourner sur le châssis ou corps de la presse, caractérisé en ce que l'organe de guidage de la ficelle est constitué par une poulie montée à rotation sur la vis, en ce que cette vis tourne librement dans le châssis ou corps de la presse et comporte un seul filet hélicoïdal s'étendant sur sa longueur, et en ce qu'une poulie à plusieurs étages axialement fixe est calée angulairement sur cette vis, cette poulie à plusieurs étages comportant au moins un étage de diamètre plus grand que celui de la poulie de guidage et un étage de diamètre plus petit que celui de cette poulie de guidage, la ficelle de liage appelée par la balle en cours de liage passant sur cette poulie de guidage de la ficelle et sur cette poulie à plusieurs étages en provoquant leur entraînement en rotation lors de cet appel, et en ce que des moyens sont prévus pour provoquer le passage sélectif de la ficelle de liage sur l'un ou l'autre des étages de la poulie à plusieurs étages.

Ainsi, lorsque la ficelle, qui passe à la fois sur un étage de la poulie multiple et sur la poulie de guidage selon une disposition provoquant la rotation de ces poulies dans le même sens s'enroule sur l'étage de la poulie multiple ayant un diamètre plus petit que celui de la poulie de guidage, on obtient un déplacement en translation dans un sens de cette dernière, étant donné qu'elle tourne alors plus lentement que la vis, tandis que le passage de la ficelle de liage sur l'autre étage de la poulie multiple, ayant un diamètre plus grand que celui de la poulie de guidage, provoque un déplacement en translation de sens opposé de cette dernière poulie sur la vis, étant donné que ladite poulie de guidage va alors tourner plus vite que la vis. Le mouvement transversal dans un sens ou dans l'autre de la poulie de guidage sur la largeur de la presse résulte alors de la différence entre les vitesses angulaires de cette poulie de guidage et de la vis, qui présente un signe fonction du diamètre de l'étage de la poulie multiple sur lequel s'enroule la ficelle de liage.

Dans ce cas encore, le guidage de la ficelle est dérivé directement de l'appel de la ficelle réalisé par la balle tournant à l'intérieur de la chambre de la presse, mais on parvient à ce résultat avec une vis comportant un seul filet, c'est-à-dire de fabrication plus simple et moins coûteuse.

Suivant un mode de réalisation préférentiel, la poulie multiple comporte un troisième étage dont le diamètre est égal à celui de la poulie de guidage. Lorsque la ficelle s'enroule sur cet étage intermédiaire, la poulie de guidage et la vis tournent alors à la même vitesse angulaire, et la poulie de guidage ne se déplace pas en translation sur la vis.

Des moyens sont prévus, suivant l'invention, pour commander le positionnement de la ficelle sur les différents étages de la poulie multiple. Ces moyens comportent au moins un guide relié à des organes de commande qui assurent le positionnement de ce guide en face des différents étages de la poulie multiple. Au début de l'opération de liage, lorsque la ficelle commence à être appelée par la balle, le guide est amené en face de l'étage de la poulie multiple ayant un diamètre plus petit ou plus grand que celui de la poulie de guidage, selon la position de fin de course choisie pour cette poulie de guidage d'un côté ou de l'autre de la presse. Ce choix est lui-même fonction de la position, sur la presse, du couteau classique sectionnant la ficelle en fin de liage et retenant l'extrémité coupée de la ficelle. Ce choix est aisé pour l'homme de métier.

Quand la poulie de guidage est arrivée dans sa position limite opposée, le guide peut être commandé pour amener la ficelle sur l'étage intermédiaire de la poulie multiple si celui-ci est prévu. Dans ce cas, la poulie de guidage reste immobile sur la longueur de la vis et plusieurs spires de ficelle peuvent être formées autour de la balle vers l'extrémité de celle-ci. Le guide est ensuite actionné en vue de son positionnement en face de l'autre étage de la poulie multiple, ce qui provoque la translation de la poulie de guidage en sens opposé au sens précédent, pour son retour à sa position de départ. Si désiré, plusieurs spires de ficelle superposées peuvent alors encore être formées pour arrêter la ficelle.

Les moyens de commande prévus pour le guide peuvent être de type quelconque, électriques, mécaniques ou hydrauliques, et leur conception est aisée pour l'homme de métier. Ils peuvent être à commande manuelle ou automatique. Une temporisation peut être prévue pour l'obtention de plusieurs spires de ficelle vers les extrémités de la balle.

Suivant une particularité, la poulie de guidage de la ficelle est de préférence combinée elle-même à un guide-ficelle angulairement fixe mais lié axialement à la poulie de guidage pour tenir compte du trajet devant être suivi par la ficelle. Ce guide, formé par exemple par un œilleton, est porté judicieusement par un levier monté à rotation sur la poulie ou sur son moyeu, dont un bras porte le guide proprement dit tandis qu'un autre bras porte un élément de retenue tel qu'un galet logé dans un rail ou une glissière fixe s'étendant sur la largeur de la presse, de façon à immobiliser angulairement ce levier et avec lui le guide.

La description qui va suivre, faite en regard des dessins annexés, donnés à titre non limitatif, permettra de mieux comprendre l'invention.

La Figure 1 est une vue en perspective d'une presse à balles cylindriques équipée du dispositif suivant l'invention.

La Figure 2 est une vue schématique partielle à plus grande échelle montrant l'agencement prévu suivant l'invention.

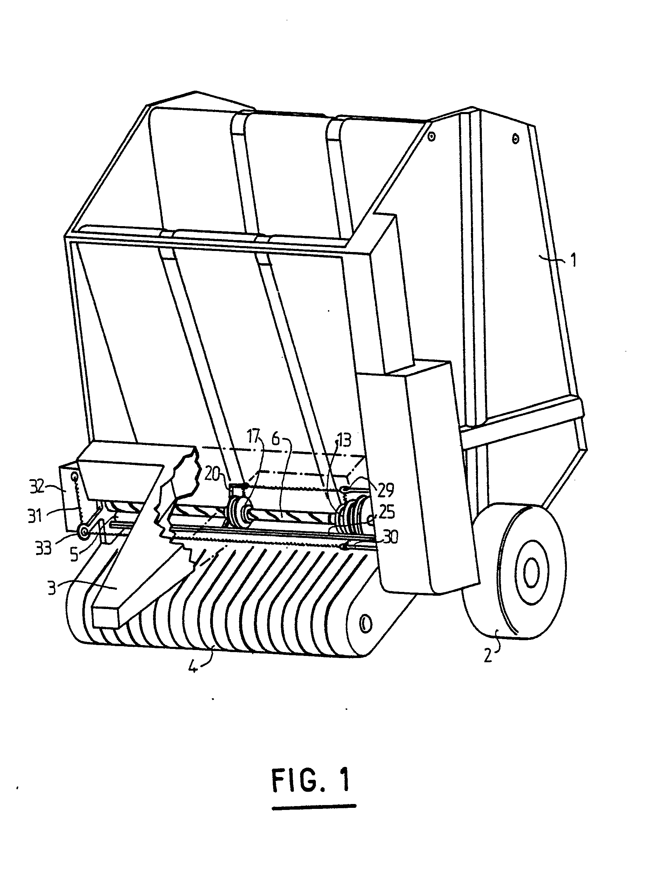

On a représenté sur la Fig. 1 une presse à balles rondes ou cylindriques de type classique, comportant un corps 1 supporté par un châssis équipé de roues 2, la presse étant destinée à être attelée à un tracteur au moyen d'un timon ou flèche d'attelage 3. Un ramasseur 4 est prévu de façon classique à la partie avant du corps 1 de la presse, de manière à ramasser les produits de récolte tels que du fourrage sur le champ et à les amener à l'orifice d'entrée des produits dans la presse, ménagé entre des rouleaux dont l'un est visible en 5 sur la Fig. 1. Ces produits subissent à l'intérieur de la chambre de la presse un enroulement sous l'effet de bandes ou courroies pour former une balle cylindrique, d'une manière en soi bien connue.

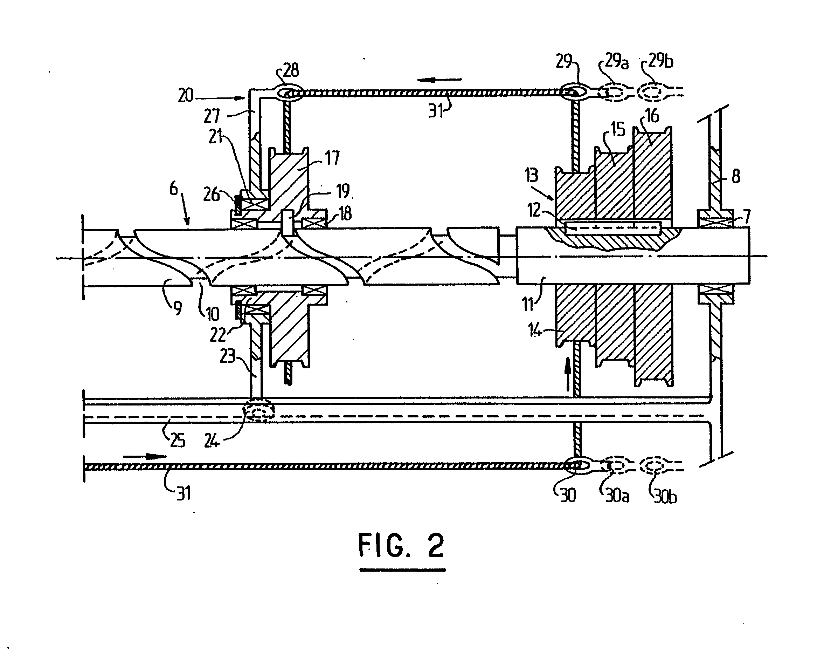

On se reportera, pour la description de l'agencement qui fait plus spécialement l'objet de l'invention, à la fois aux Fig. 1 et 2.

Suivant l'invention, une vis 6 est disposée transversalement à la presse un peu en avant de l'orifice d'entrée des produits de récolte et parallèlement à cet orifice. Cette vis est tourillonnée comme indiqué en 7 sur la Fig. 2 dans les parois latérales 8 de la presse. Elle comporte une partie 9 qui s'étend sur la presque totalité de sa longueur et qui est munie d'un filet constitué ici par une gorge 10, et une partie de faible longueur 11, formant un arbre sur lequel est clavetée, comme indiqué en 12, une poulie 13 comportant trois étages ou gorges 14, 15 et 16 ayant des diamètres différents.

Une autre poulie 17 est montée de façon à pouvoir tourner par des roulements 18 autour de la partie 9 de la vis 6. Cette poulie 17 a un diamètre effectif plus grand que celui de l'étage 14 de la poulie 13, égal à celui de l'étage 15, et plus petit que celui de l'étage 16. Elle présente dans son alésage intérieur un ergot 19 qui est engagé dans la gorge 10 de la partie 9 de la vis 6, de sorte qu'un déplacement angulaire relatif entre la poulie 17 et la vis 6 provoque un déplacement longitudinal de cette poulie 17 sur cette vis 6. Un levier 20 est monté à rotation par un roulement 21 autour d'un moyeu 22 de la poulie 17. Ce levier comprend un premier bras 23 portant à son extrémité libre un galet 24 qui est logé dans un rail ou une glissière 25 fixé rigidement sur le corps de la presse, de sorte que le levier 20 est immobilisé angulairement du fait de son montage autour du moyeu 22 de la poulie 17 et de l'engagement du galet 24 dans le rail 25, tout en pouvant accompagner la poulie 17 lors de son déplacement en translation sur la vis 6, le levier 20 étant retenu axialement à cet effet sur le moyeu 22 de la poulie 17 par une bague ou rondelle 26.

Le levier 20 comporte un second bras 27 terminé à son extrémité libre par une partie coudée portant un œilleton de guidage 28 qui se trouve, comme montré sur le dessin, en face de la gorge de la poulie 17.

Le dispositif qui fait l'objet de l'invention comprend en outre un guide de commande de liage qui est représenté dans le cas présent par deux œilletons 29, 30 reliés à un même support (non représenté) déplacé lui-même par un dispositif de commande permettant d'amener sélectivement ces œilletons de guidage 29, 30 dans trois positions différentes situées respectivement en face des étages ou gorges 14, 15 et 16 de la poulie triple 13.

La réalisation d'un tel dispositif de commande est aisée pour les techniciens spécialisés dans ce domaine et il ne semble pas nécessaire de le décrire ici en détail. Il peut comporter, par exemple, un chariot formant support dont la translation sur un guide est commandée mécaniquement, électriquement ou hydrauliquement à la main ou de façon automatique, pour parvenir dans l'une des trois positions considérées, en fonction du cycle de liage, dont le déroulement est bien connu dans ce domaine.

On a indiqué en 31 la ficelle servant au liage. Cette ficelle est prélevée à une boîte à ficelle 32 fixée de la façon habituelle sur le côté de la presse (Fig. 1). La ficelle traverse ensuite un œilleton de guidage 33, puis elle passe à travers l'œilleton 30, sur la poulie 13, à travers l'œilleton 29 et l'œilleton 28, et autour de la poulie 17, pour pénétrer ensuite dans le corps de la presse pour le liage.

La description qui précède a été limitée aux organes destinés à assurer le déplacement transversal positif de la ficelle pénétrant dans la chambre de la presse pendant l'opération de liage, étant donné que tous les autres organes servant à déclencher et à compléter le liage peuvent être en soi classiques.

On décrira maintenant le fonctionnement correspondant au mode de réalisation de l'invention décrit ci-avant.

D'une manière en soi connue, l'extrémité libre de la ficelle est, au début de l'opération de liage, retenue par un couteau ayant servi à sectionner cette ficelle à la fin de l'opération de liage de la balle précédente. Au début de l'opération, la poulie 17 se trouve à l'extrémité de la vis 6 voisine du couteau retenant l'extrémité de la ficelle.

Lorsque la formation de la balle est terminée, des moyens en soi classiques (non représentés) provoquent de façon connue l'ouverture du couteau retenant la ficelle de sorte que l'extrémité de celle-ci pend librement et peut être reprise par les produits de récolte et par la balle, qui entraîne ainsi cette ficelle par son mouvement de rotation, en exerçant sur elle une traction.

On supposera ici qu'au début de l'opération de liage la poulie 17 se trouve à l'extrémité de la partie 9 de la vis 6 qui est voisine de sa partie 11 portant la poulie 13 et que les guides 29, 30 occupent une position telle que la ficelle 31 passe sur l'étage 14 de cette poulie 13, comme représenté sur la Fig. 2.

Comme indiqué, les diamètres des différents étages de la poulie 13 sont choisis de façon telle que l'étage 14 ait un diamètre inférieur au diamètre effectif de la poulie 17, tandis que l'étage 15 a un diamètre égal à celui de la poulie 17 et que l'étage 16 a un diamètre supérieur à celui de cette poulie 17.

Par suite de son appel par la balle tournant à l'intérieur de la chambre de la presse, la ficelle 31 est prélevée de façon connue à la boîte à ficelle 32 et, au cours de son passage sur les poulies 13 et 17, elle entraîne ces poulies en rotation.

Etant donné que la poulie 13 est calée sur la partie 11 de la vis 6, elle provoque l'entraînement en rotation de celle-ci. On supposera que le sens d'entraînement est le sens anti-horaire quand on regarde la Fig. 2 depuis le côté droit. On supposera également que le passage de la ficelle 31 sur la poulie 17 provoque la rotation de cette poulie dans le même sens que la vis 6.

Dans la condition représentée sur la Fig. 2, étant donné que la diamètre effectif de la poulie 17 est plus grand que celui de l'étage de poulie 14, il va résulter de l'entraînement en rotation de ces deux poulies par la ficelle 31 une rotation de la poulie 13 et en conséquence de la vis 6 à une vitesse angulaire plus rapide que la rotation de la poulie 17.

Dans ces conditions, compte tenu de la différence entre ces vitesses de rotation, la poulie 17 va subir sur la vis 6 un mouvement de translation vers la gauche en regardant la Fig. 2, en direction de l'autre côté de la presse, en déplaçant ainsi la ficelle transversalement à la presse devant l'orifice d'entrée de celle-ci. Du fait de ce déplacement par guidage, la ficelle va former autour de la balle plusieurs spires réparties sur la longueur de celle-ci.

Quand la poulie 17 atteint une position limite du côté de la presse opposé à la poulie 13, c'est-à-dire sur le côté droit de la presse si l'on considère son sens de marche sur la Fig. 1, elle va actionner par exemple par butée un organe de commande qui va agir sur le dispositif de commande des guides 29 et 30 pour amener ces guides dans les positions indiquées en 29a, 30a dans lesquelles ces guides se trouvent en face de l'étage 15 de la poulie 13.

Etant donné que cet étage 15 a un diamètre égal à celui de la poulie 17, celle-ci va tourner à la même vitesse que la vis 6 entraînée par le passage de la ficelle 31, et plusieurs spires de ficelle peuvent être alors formées vers l'extrémité de la balle.

Après un certain nombre de spires, le dispositif de commande des guides 29, 30 va être à nouveau actionné pour amener ces guides dans les positions indiquées en 29b, 30b.

Dans ces positions, la ficelle 31 va passer autour de l'étage 16 de la poulie 13 et en conséquence la vis 6 va être entraînée en rotation à une vitesse inférieure à la vitesse angulaire de la poulie 17, de sorte que cette poulie va subir un mouvement de translation en retour sur la vis 6 en direction de la poulie 13.

Quand la poulie 17 va parvenir au voisinage de la poulie 13, le dispositif de commande peut être actionné à nouveau pour amener les guides 29, 30 en face de l'étage 15 de la poulie 13, afin de former plusieurs spires de ficelle superposées, permettant d'arrêter la ficelle.

Le couteau prévu sur la presse peut ensuite agir de manière connue pour sectionner la ficelle, et la balle liée peut être déchargée.

On voit que l'opération de liage des balles peut ainsi être assurée avec des moyens simples, d'une fabrication aisée, dont la réunion forme un ensemble de fonctionnement fiable. L'entraînement est assuré par la ficelle de liage elle-même, sauf en ce qui concerne la commande des guides 29, 30.

Il va de soi à cet égard que le cycle de liage décrit ci-avant ne constitue qu'un exemple possible. Ainsi, on pourrait si désiré prévoir en combinaison avec le dispositif un couteau de chaque côté de la presse, la poulie 17 n'effectuant alors qu'un seul déplacement transversal pour le liage, la ficelle 31 passant autour de l'étage 14 ou 16 de la poulie 13 selon le sens de ce déplacement. Dans un tel cas, une ou plusieurs spires pourraient être formées à chaque extrémité de la balle par engagement de la ficelle autour de l'étage 15 de cette poulie 31. Le nombre des spires superposées alors formées peut être réglé par une simple temporisation.

D'autres modifications peuvent être apportées au mode de réalisation décrit, dans le domaine des équivalences techniques, sans s'écarter de l'invention.

**Revendications**

1. Dispositif de liage pour presses à balles rondes ou cylindriques comprenant un organe de guidage (17) de la ficelle déplaçable transversalement à la presse sur un guide rectiligne constitué par une vis (6) du type à filet hélicoïdal montée devant l'orifice d'entrée des produits de récolte dans la chambre de la presse et destinée à tourner sur le châssis ou corps (1) de la presse, caractérisé en ce que l'organe de guidage de la ficelle est constitué par une poulie (17) montée à rotation sur la vis (6), en ce que cette vis (6) tourne librement dans le châssis ou corps (1) de la presse et comporte un seul filet hélicoïdal (10) s'étendant sur sa longueur, en ce qu'une poulie à plusieurs étages (13) axialement fixe est calée angulairement sur cette vis, cette poulie à plusieurs étages (13) comportant au moins un étage (16) de diamètre plus grand que celui de la poulie de guidage (17) et un étage (14) de diamètre plus petit que celui de cette poulie de guidage (17), la ficelle de liage (31) appelée par la balle en cours de liage passant sur cette poulie de guidage (17) de la ficelle et sur cette poulie à plusieurs étages (13) en provoquant leur entraînement en rotation lors de cet appel, et en ce que des moyens (29, 30) sont prévus pour provoquer le passage sélectif de la ficelle de liage sur l'un ou l'autre des étages (14-16) de la poulie à plusieurs étages (13).

2. Dispositif suivant la revendication 1, caractérisé en ce que la poulie à plusieurs étages (13) comprend un troisième étage (15) ou étage intermédiaire dont le diamètre est égal à celui de la poulie de guidage (17).

3. Dispositif suivant la revendication 1 ou 2, caractérisé en ce que les moyens (29, 30) provoquant le passage sélectif de la ficelle de liage (31) sur les étages (14-16) de la poulie à plusieurs étages (13) comprennent un guide relié à des organes de commande qui assurent le positionnement de ce guide en face des différents étages (14-16) de cette poulie à plusieurs étages (13).

4. Dispositif suivant la revendication 3, caractérisé en ce que ces moyens de commande sont de type manuel ou automatique.

5. Dispositif suivant la revendication 3 ou 4, caractérisé en ce que ces moyens de commande comportent une temporisation pour régler le temps de positionnement de la ficelle (31) sur l'étage intermédiaire (15) de la poulie à plusieurs étages (13).

6. Dispositif suivant l'une quelconque des revendications précédentes, caractérisé en ce que la poulie de guidage (17) est combinée à un œilleton de guidage (28) ou élément analogue angulairement fixe mais lié axialement à cette poulie de guidage.

7. Dispositif suivant la revendication 6, caractérisé en ce que cet œilleton de guidage (28) est porté par un bras (27) d'un levier (20) monté à rotation sur la poulie (17) ou sur son moyeu (22) et dont un autre bras (23) porte un élément de retenue tel qu'un galet (24) monté dans un rail ou une glissière fixe (25) s'étendant sur la largeur de la presse.

**Claims**

1. A binding device for round or cylindrical bale presses comprising a twine guide member (17) which is displaceable transversely with respect to the press on a rectilinear guide formed by a screw (6) of helicoidal thread type which is mounted in front of the opening for the intake of crop products into the chamber of the press and which is intended to rotate on the chassis or body (1) of the press, characterised in that the twine guide member comprises a pulley (17) which is mounted rotatably on the screw (6), that the screw (6) rotates freely in the chassis or body (1) of the press and comprises a single helicoidal thread (10) extending over the length thereof, that an axially fixed pulley (13) having a plurality of stages is angularly fixed on said screw, said pulley (13) having a plurality of stages comprising at least one stage (16) which is larger in diameter than the guide pulley (17) and a stage (14) which is smaller in diameter than the guide pulley (17), the binding twine (31) which is called for by the bale in the course of binding passing over said twine guide pulley (17) and over said pulley (13) having a plurality of stages, causing them to be driven in rotation when the binding twine is called for in that manner, and that means (29, 30) are provided for causing the binding twine to pass selectively to one or other of the stages (14-16) of the pulley (13) having a plurality of stages.

2. A device according to claim 1 characterised in that the pulley (13) comprises a third or intermediate stage (15) whose diameter is equal to the diameter of the guide pulley (17).

3. A device according to claim 1 or claim 2 characterised in that the means (29, 30) for causing the binding twine (31) to pass selectively to the stages (14-16) of the pulley (13) comprise a guide which is connected to control members which provide for positioning of said guide facing the different stages (14-16) of said pulley (13).

4. A device according to claim 3 characterised in that said control means are of manual or automatic type.

5. A device according to claim 3 or claim 4 characterised in that said control means comprise a timing means for adjusting the time for positioning the twine (31) on the intermediate stage (15) of the pulley (13).

6. A device according to any one of the preceding claims characterised in that the guide pulley (17) is combined with a guide eye (28) or like element which is angularly fixed but axially connected to said guide pulley.

7. A device according to claim 6 characterised in that said guide eye (28) is carried by an arm (27) of a lever (20) which is mounted rotatably on the pulley (17) or on its hub (22), another arm (23) of said lever carrying a retaining element such as a roller (24) mounted in a fixed slideway or rail (25) extending over the width of the press.

**Patentansprüche**

1. Bindevorrichtung für Pressen von runden oder zylindrischen Ballen, die ein Garnführungsorgan (17) umfaßt, das quer zur Presse auf einer geradlinigen Führung verstellbar ist, die durch eine Schraube (6) des Typs mit Spiralverzahnung gebildet wird, welche vor der Eintrittsöffnung für die Ernteprodukte in die Kammer der Presse montiert und dazu bestimmt ist, auf dem Chassis oder Körper (1) der Presse zu drehen, dadurch gekennzeichnet, daß das Garnführungsorgan durch eine Scheibe (17) gebildet ist, die zum Drehen auf der Schraube (6) montiert ist, daß die Schraube (6) frei in dem Chassis oder Körper (1) der Presse rotiert und einen einzigen spiralförmigen Gewindegang (10) aufweist, der sich über ihre Länge erstreckt, daß eine axial festgelegte Scheibe (13) mit mehreren Etagen winkelförmig auf dieser Schraube aufgekeilt ist, wobei diese mehretagige Scheibe (13) wenigstens eine Etage (16) mit einem Durchmesser größer als der der Führungsscheibe (17) und eine Etage (16) aufweist, deren Durchmesser kleiner als der der Führungsscheibe (17) ist, wobei das Bindegarn (31), das während des Bindevorganges vom Ballen abgerufen wird, über jene Führungsscheibe (17) für das Garn und über jene mehretagige Scheibe (13) läuft und während seines Abzuges deren Drehantrieb bewirkt, und daß Mittel (29, 30) vorgesehen sind, um das Passieren des Bindegarns selektiv über die eine oder die andere der Etagen (14-16) der mehretagigen Scheibe (13) hervorzurufen.

2. Vorrichtung nach Anspruch 1, dadurch gekennzeichnet, daß die mehretagige Scheibe (13) eine dritte Etage (15) oder eine mittlere Etage aufweist, deren Durchmesser gleich dem der Führungsscheibe (17) ist.

3. Vorrichtung nach Anspruch 1 oder 2, dadurch gekennzeichnet, daß die Mittel (29, 30) welche den selektiven Übergang des Bindegarnes (31) auf die Etagen (14-16) der mehretagigen Scheibe (13) hervorrufen, eine Führung aufweisen, welche mit Steuerorganen verbunden ist, die die Einstellung dieser Führung gegenüber den verschiedenen Etagen (14-16) dieser mehretagigen Scheibe (13) sicherstellen.

4. Vorrichtung nach Anspruch 3, dadurch gekennzeichnet, daß diese Steuermittel vom manuellen oder automatischen Typ sind.

5. Vorrichtung nach Anspruch 3 oder 4, dadurch gekennzeichnet, daß die Steuermittel eine Verzögerungen zum Regulieren der Positionierzeit des Garnes (31) auf der mittleren Etage (15) der mehretagigen Scheibe aufweisen.

6. Vorrichtung nach irgendeinem der voranstehenden Ansprüche, dadurch gekennzeichnet, daß die Führungsscheibe (17) mit einer Führungshilfe (28) oder einem analogen Element kombiniert ist, das winkelmäßig fixiert, aber axial mit der Führungsscheibe verbunden ist.

7. Vorrichtung nach Anspruch 6, dadurch gekennzeichnet, daß diese Führungshülse (28) durch einen Arm (27) eines Hebels (20) getragen wird, der drehbar auf der Scheibe (17) oder auf deren Nabe (22) montiert ist und dessen anderer Arm (23) ein Halteelement trägt, z. B. eine Rolle (24), die in eine Schiene oder eine feste Führungsbahn (25) eingreift, die sich über die Breite der Presse erstreckt.

# FIG. 1

FIG. 2